# EUROPEAN PATENT SPECIFICATION

(11) **EP 0 782 116 B1**
(45) Date of publication and mention of the grant of the patent: **20.03.2002**
(21) Application number: 96120890.7
(22) Date of filing: 27.12.1996
(51) Int. Cl.: G08B 5/22

(54) **Radio paging receiver capable of easily producing a transmission message**
Zum Senden einer Meldung fähiger Funkrufempfänger
Récepteur d'appel radio capable de transmettre un message

(30) Priority: 28.12.1995 JP 34251395
(43) Date of publication of application: 02.07.1997
(73) Proprietor: NEC CORPORATION, Tokyo (JP)
(72) Inventor: Tsunoda, Kazuyuki, Kakegawa-shi, Shizuoka (JP)
(74) Representative: VOSSIUS & PARTNER

(56) References cited:
- EP-A- 0 589 417
- GB-A- 2 280 769
- US-A- 5 099 507
- PATENT ABSTRACTS OF JAPAN vol. 014, no. 268 (E-0939), 11 June 1990 & JP 02 082824 A (CASIO COMPUT CO LTD), 23 March 1990,

## Description

This invention relates to a radio paging receiver and, more particularly, to a radio paging receiver capable of producing a transmission message.

In general, a radio paging receiver is known which is capable of producing a transmission message. On transmitting the transmission message to a fellow radio paging receiver, it is necessary to select a specific one of a plurality of abbreviated message codes that is specific to the transmission message. The radio paging receiver is supplied with a fellow abbreviated call or telephone number and the specific abbreviated message code from an input section. The radio paging receiver generates a dual tone multi-frequency (DTMF) signal on the basis of the fellow abbreviated call number and the specific abbreviated message code. The DTMF signal is supplied to a push phone as known in the art in order to transmit the transmission message to the fellow radio paging receiver.

It is not easy for a user to search the specific abbreviated message code from the plurality of abbreviated message codes on inputting the specific abbreviated message code to the radio paging receiver. To solve this problem, an improved radio paging receiver is disclosed in JP-A-2-82824. The improved radio paging receiver comprises a message memory for memorizing a plurality of predetermined messages which correspond to the abbreviated message codes. On producing the transmission message, the improved radio paging receiver displays in turn the predetermined messages in correspondence to the abbreviated message codes on a display section. The user selects the specific abbreviated message code from the abbreviated message codes with reference to the predetermined messages.

However, it is difficult to produce the transmission message in the improved radio paging receiver at a high speed inasmuch as the improved radio paging receiver displays in turn the predetermined messages in correspondence to the abbreviated message codes on the display section. Furthermore, the improved radio paging receiver occupies a telephone line for a long time inasmuch as it takes a long time to input the specific abbreviated message code.

EP-A-589 417 discloses a data transmitting/receiving system according to the preamble of claim 1.

It is therefore an object of this invention to provide a radio paging receiver capable of easily producing a transmission message at a high speed.

This object is achieved with the features of the claims.

Other objects of this invention will become clear as the description proceeds.
Fig. 1 is a block diagram of a radio paging receiver according to a preferred embodiment of this invention;
Fig. 2 shows a front view for illustrating an appearance of the radio paging receiver illustrated in Fig. 1;
Fig. 3 is an example of data memorized in a message memory illustrated in Fig. 1;
Fig. 4 is an example of a character table illustrated in Fig. 1;
Fig. 5 is an example of data memorized in a telephone number memory illustrated in Fig. 1;
Fig. 6 is an example for describing a key operation and a display on producing a transmission message; and
Fig. 7 is an example for describing a key operation and a display on transmitting a transmission message by a dual tone multi-frequency signal.

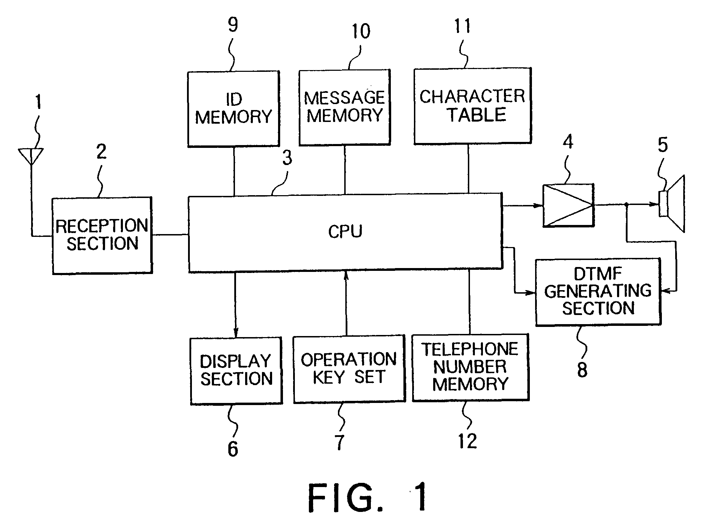

Referring to Fig. 1, the illustrated radio paging receiver receives a specific one of a plurality of call signals that is specific to the radio paging receiver. Each of the call signals may be succeeded by a message signal indicative of a message. The call signals and the message signals are transmitted as a radio signal from a transmitting or base station (not shown).

The radio paging receiver comprises an antenna 1, a reception section 2, and a central processing unit (CPU) 3. The reception section 2 is intermittently put into operation for receiving the radio signal through the antenna 1 to demodulate the radio signal into a demodulated signal. The demodulated signal is supplied as a reception digital signal to the CPU 3.

The CPU 3 is supplied with the reception digital signal to distinguish a specific one of the call signals that is specific to the radio paging receiver. More particularly, the radio paging receiver comprises an identifier code (ID) memory 9 for memorizing an identifier code as an own identifier code specific to the radio paging receiver. Each of call signals carries an identifier code as a call identifier code or a telephone number. When the CPU 3 is supplied with the reception digital signal, the CPU 3 accesses the ID memory 9 to read the own identifier code out of the ID memory 9. The CPU 3 compares the own identifier code with each of call identifier codes to detect the specific call signal specific to the radio paging receiver. When the CPU 3 detects the specific call signal, the CPU 3 sends a tone signal through an amplifier 4 to a loudspeaker 5 to make the loudspeaker 5 generate a call tone indicative of a call for the radio paging receiver.

When the specific call signal is succeeded by a specific message signal, the CPU 3 receives the specific message signal succeeding the specific call signal to display a specific message on a display section 6 in accordance with the specific message signal. More specifically, each of message signals carries message codes and/or character codes. The radio paging receiver further comprises a message memory 10 and a character table 11. The message memory 10 is for memorizing a plurality of memorized message codes in correspondence to memorized messages, respectively. The character table 11 memorizes a plurality of memorized character codes in correspondence to memorized kana and alphanumeric characters, respectively. The CPU 3 converts the specific message signal into the specific message with reference to the message memory 10 and the character table 11 to display the specific message on the display section 6.

In case where the radio paging receiver transmits a transmission message to a fellow radio paging receiver which is similar in structure to the radio paging receiver, the CPU 3 of the radio paging receiver produces a fellow call (telephone) or ID number and the transmission message as will be described later. The fellow call number and the transmission message are sent to a dual tone multi-frequency (DTMF) generating section 8 to be converted into a push button dial tone signal which is supplied to the loudspeaker 5. The loudspeaker 5 generates a push button dial tone on the basis of the push button dial tone signal.

The push button dial tone is inputted to a receiver of a push phone (not shown) to be sent to the transmitting or base station through a telephone line. As described above, the push button dial tone is carried as a call signal and a message signal by the radio signal.

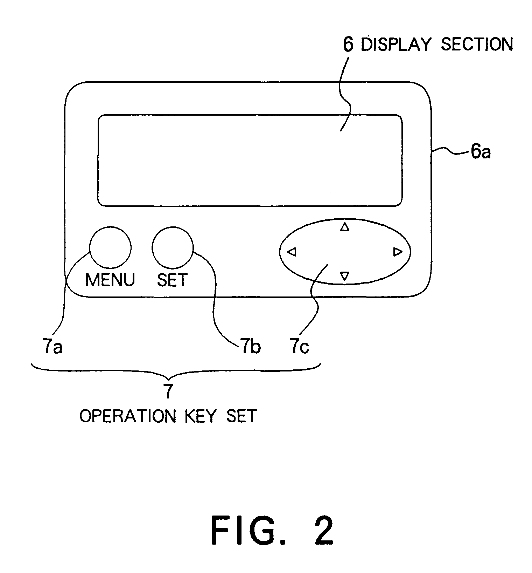

Referring to Fig. 2, the radio paging receiver has a body portion 6a on which the display section 6 and an operation key set 7 are positioned. The operation key set 7 comprises a menu key 7a, a set key 7b, and a scroll key 7c all of which will be later described.

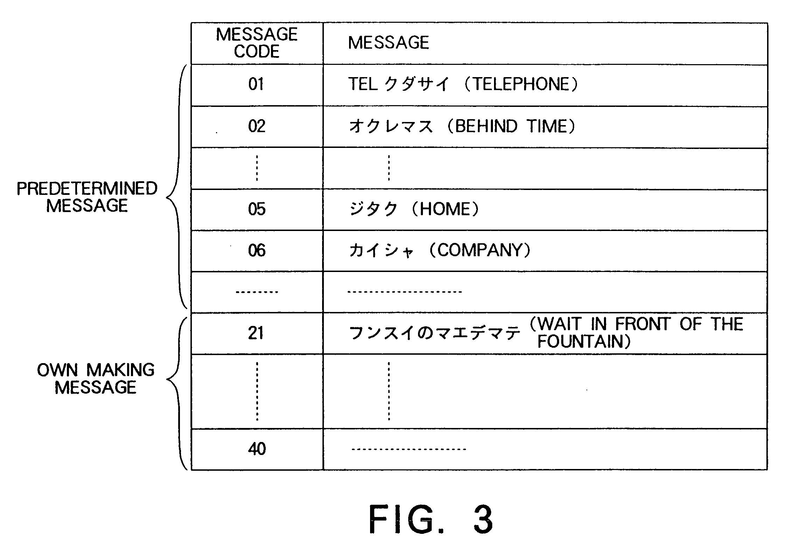

Referring to Fig. 3, the message memory 10 contains the plurality of memorized messages in correspondence to the memorized message codes. The memorized messages are divided into predetermined messages and own or user making messages. In the example being illustrated, "TEL 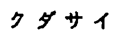 (TEL Kudasai) (= Telephone to me)" is memorized as a first predetermined memorized message in correspondence to a first memorized message code "01". In correspondence to a second memorized message code "02", " 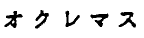 (Okuremasu) (= Behind time)" is memorized as a second predetermined memorized message. " 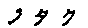 (Jitaku) (= Home)" is memorized as a fifth predetermined memorized message in correspondence to a fifth memorized message code "05". " 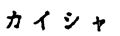 (Kaisha) (= Company)" is memorized as a sixth predetermined memorized message in correspondence to a sixth memorized message code "06". " 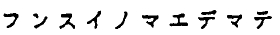 (Funsui no maede mate) (= Wait in front of the fountain)" is memorized as an own or user making message in correspondence to a twenty-first memorized message code "21".

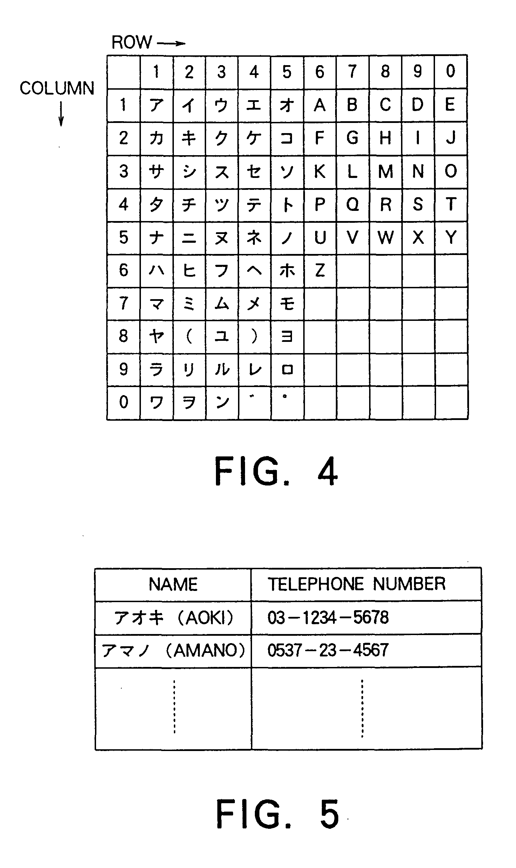

Referring to Fig. 4, the character table 11 is a matrix table having character codes each of which comprises a row code and a column code.

Referring to Fig. 5 in addition to Fig. 1, the radio paging receiver further comprises a telephone number memory 12 for memorizing a plurality of telephone numbers in correspondence to human names, respectively. In the example being illustrated, a first human name " 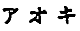 (Aoki)" has the telephone number "03-1234-5678". A second human name " 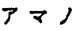 (Amano)" has the telephone number "0537-23-4567".

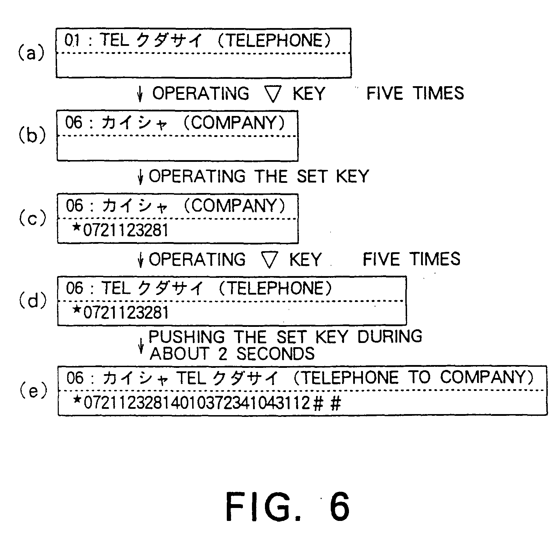

Referring to Fig. 6 together with Figs. 1 and 2, description will be made about production of the transmission message. The menu key 7a and the set key 7b are operated in order to select a message producing mode. In the message producing mode, the CPU 3 accesses the message memory 10 to read the memorized messages and the memorized message codes as read-out messages and read-out message codes, respectively. The CPU 3 displays the read-out messages on an upper portion of the display section 6 in correspondence to the read-out message codes, respectively. More particularly, the CPU 3 displays a first read-out message and a first message code on the upper portion of the display section 6 in an initial state as shown at a first row labelled (a) in Fig. 6. In the example being illustrated, the first read-out message code is representative of "01". The first read-out message is representative of "TEL 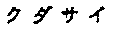 (TEL Kudasai) (= Telephone)".

When the user operates or pushes the downward arrow portion of the scroll key 7c five times to scroll the image plane of the display section 6 upwardly of Fig. 2, the CPU 3 displays the sixth read-out message code and the sixth read-out message on the upper portion of the display section 6 as shown at a second row labelled (b) in Fig. 6. The sixth read-out message code is representative of "06". The sixth read-out message is representative of " 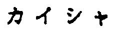 (Kaisha) (= Company)".

In this condition, the CPU 3 converts the sixth read-out message into a primary character code sequence with reference to the character table 11 when the user pushes the set key 7b. In the example being illustrated, the primary character code sequence is given by "*0721123281" which is displayed on a lower portion of the display section 6 as shown at a third row labelled (c) in Fig. 6. In the character code sequence, "*07" is a code which is indicative of a head of the character code sequence.

After that, it will be assumed that the user operates the upward arrow portion of the scroll key 7c five times to scroll the image plane of the display section 6 downwardly of Fig. 2. The CPU 3 displays the first read-out message code and the first read-out message on the upper portion of the display section 6 as shown at a fourth row labelled (d) in Fig. 6. In this event, the primary character code sequence given by "*0721123281" is displayed on the lower portion of the display section 6.

When the user pushes the set key 7b for about 2 seconds, the CPU 3 converts the first read-out message into a secondary character code sequence "4010372341043112" with reference to the character table 11 to combine the secondary character code sequence with the primary character code sequence. As a result, the CPU 3 produces a combined message as the own making message and a combined character code sequence. In this event, the own making message is representative of " 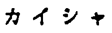 + TEL 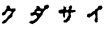 (Kaisha TEL Kudasai) (= telephone to company)". The combined character code sequence is representative of "*07211232814010372341043112##". As shown at a fifth row labelled (e) in Fig. 6, the own making message is displayed on the upper portion of the display section 6. The combined message code sequence is displayed on the lower portion of the display section 6. Furthermore, the CPU 3 stores the own making message in the message memory 10. In the combined message code sequence, "##" is a code which is indicative of an end of the character code sequence.

In case of transmitting the own making message as the transmission message to the fellow radio paging receiver, the user may operate the push buttons of a push phone with reference to the combined message code sequence displayed on the display section 6, after the user dials the telephone number of the fellow radio paging receiver by the push phone.

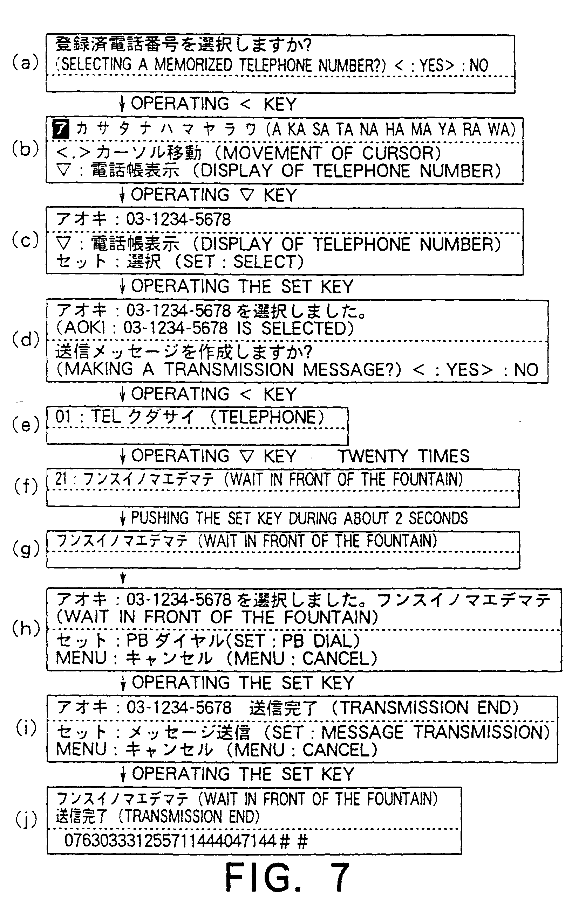

Referring to Fig. 7 together with Figs. 1 and 2, description will be made about transmitting the transmission message to the fellow radio paging receiver by using the DTMF signal.

It will be assumed that an own making message " 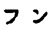 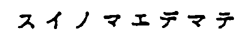 (Funsui no maede mate) (= Wait in front of the fountain)" is transmitted to Mr. Aoki. On transmitting the own making message to Mr. Aoki who has the fellow radio paging receiver, the user operates the menu key 7a and the set key 7b to select a telephone number selecting mode. When the telephone number selecting mode is selected, the CPU 3 displays a selection message on the upper portion of the display section 6. The selection message is given by " 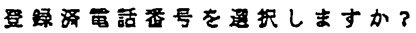 (Tourokuzumi denwabangou o sentaku shimasuka?) (= selecting a memorized telephone number?)" as shown at a first row labelled (a) in Fig. 7. When the user operates the scroll key 7c to select "YES", the CPU 3 displays a name index message on the display section 6 as shown at a second row labelled (b) in Fig. 7. The name index message is given by " 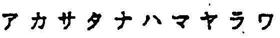 (AKaSaTaNaHaMaYaRaWa)". Inasmuch as the user wants to transmit the own making message to Mr. Aoki, the user operates the scroll key section 7c to move a cursor and to thereby select " 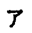 (A)" row. After that, the user operates the scroll key 7c in order to display telephone numbers corresponding to " 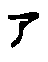 (A)" row. The CPU 3 accesses the telephone number memory 12 to display in turn the telephone numbers corresponding to " 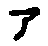 (A)" row on the display section 6.

When the user operates the scroll key 7c to select " 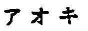 (Aoki)", the CPU 3 displays the telephone number of Mr. Aoki as shown at a third row labelled (c) in Fig. 7. The user operates the set key 7b, the CPU 3 displays a selection end message on the upper portion of the display section 6 as shown at a fourth row labelled (d) in Fig. 7. The selection end message is given by " 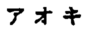 03-1234-5678 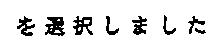 (Aoki: 03-1234-5678 o sentaku shimashita) (= selecting Mr. Aoki:03-1234-5678)". On the lower portion of the display section 6, the CPU 3 displays a production message representative of whether or not the user produces an own making message at the fourth row (d) in Fig. 7. The production message is given by " 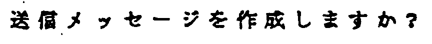 (Soushin messeeji o sakusei shimasuka?) (=Do you make a transmission message?)".

When the user operates the scroll key 7c to select "YES", the CPU 3 enters the message producing mode. In the message producing mode, the CPU 3 displays the first read-out message and the first read-out message code on the upper portion of the display section 6 in the initial state as shown at a fifth row labelled (e) in Fig. 7. In the example being illustrated, the first read-out message code is representative of "01". The first read-out message is representative of "TEL 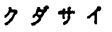 (TEL Kudasai) (= Telephone to me)". When the user operates or pushes the scroll key 7c at twenty times to scroll the image plane of the display section 6 upwardly of Fig. 2, the CPU 3 displays the twenty-first read-out message code and the twenty-first read-out message on the upper portion of the display section 6 as shown at a sixth row labelled (f) in Fig. 7. The twenty-first read-out message code is representative of "21". The twenty-first read-out message is representative of " 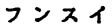 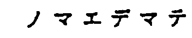 (Funsui no maede mate) (= Wait in front of the fountain)".

In this condition, the CPU 3 converts the twenty-first read-out message into a character code sequence "*076303331255711444047144##" with reference to the character table 11 to display the character code sequence on the lower portion of the display section as shown at the seventh row labelled (g) in Fig. 7 when the user pushes the key 7b for about 2 seconds.

After a predetermined time duration lapses, the CPU 3 displays the telephone number of Mr. Aoki and the twenty-first read-out message on the upper portion of the display section 6 as shown at an eighth row labelled (h) in Fig. 7. Furthermore, the CPU 3 displays a PB dial selection message representative of whether or not the user selects PB dial (push button dial) on the lower portion of the display section 6 as shown at the eighth row (h) in Fig. 7. When the user operates the set key 7b to select the PB dial, the CPU 3 supplies the DTMF generating section 8 with the telephone number of Mr. Aoki. The DTMF generating section 8 generates a first dual tone multi-frequency signal in accordance with the telephone number of Mr. Aoki. The first dual tone multi-frequency signal is outputted as a first dual tone multi-frequency signal from the loudspeaker 5. On the upper portion of the display section 6, the CPU 3 displays " 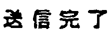 (Soushin kanryo) (= transmission end)" in addition to the telephone number of Mr. Aoki as shown at a ninth row labelled (1) in Fig. 7.

When the user again operates the set key 7b to select " 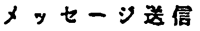 (Messeeji soushin) (= a message transmission)", the CPU 3 supplies the DTMF generating section 8 with the twenty-first read-out message. The DTMF generating section 8 generates a second dual tone multi-frequency signal in accordance with the twenty-first character code sequence. The second dual tone multi-frequency signal is outputted as a second dual tone multi-frequency signal from the loudspeaker 5. On the upper portion of the display section 6, the CPU 3 displays " 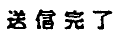 (Soushin kanryo) (= transmission end)" in addition to the twenty-first read-out message as shown at a tenth row labelled (j) in Fig. 7. The CPU 3 displays the twenty-first character code sequence on the lower portion of the display section 6.

While this invention has thus far been described in conjunction with the preferred embodiment thereof, it will readily be possible for those skilled in the art to put this invention into practice in various other manners.

## Claims

1. A radio paging receiver for distinguishing a specific one of a plurality of call signals specific to said radio paging receiver to receive a specific message signal succeeding said specific call signal as a reception message signal which is displayed as a reception message on a display section (6), said radio paging receiver comprising a producing means (3, 10, 11)for producing a transmission message which is transmitted as a transmission message signal to a fellow radio paging receiver through a telephone line, **characterized in that** said producing means comprises:
message memory means (10) for memorizing a plurality of predetermined messages and a plurality of own making messages;
character table means (11) for memorizing a plurality of characters in correspondence to a plurality of character codes, respectively; and
message producing means (3) for accessing said message memory means to read said predetermined messages as read-out messages and to thereby display said read-out messages on said display section, said message producing means selecting selected ones of said read-out messages in accordance with a selecting signal to combine said selected read-out messages into a combined message and thereby to display said combined message on said display section;
said message producing means comprising converting means for converting said combined message into a character code sequence with reference to said character table means to display said character code sequence as said transmission message on said display section.

2. A radio paging receiver as claimed in claim 1, wherein said character table means (11) memorizes kana and alphanumeric characters as said characters.

3. A radio paging receiver as claimed in claim 1 or 2, wherein said character table means (11) is a matrix table having said character codes each of which comprises a row code and a column code, each of said characters being represented by said row and said column codes.

4. A radio paging receiver as claimed in claim 1, 2 or 3, comprising dual tone generating means (5, 8) for generating a dual tone on the basis of said character code sequence to supply said dual tone to said telephone line through a telephone device.

5. A radio paging receiver as claimed in claim 4, wherein said dual tone generating means (5, 8) comprises:
a generating section (8) for generating a dual tone multi-frequency signal on the basis of said character code sequence; and
a speaker section (5) for outputting said dual tone in accordance with said dual tone multi-frequency signal.

6. A radio paging receiver as claimed in any one of claims 1 to 5, wherein said message producing means (3) stores said combined message as one of said own making messages in said message memory means (10).

7. A radio paging receiver as claimed in claim 1 or 6, comprising dual tone generating means (5, 8) for generating a dual tone on the basis of said character code sequence to supply said dual tone to said telephone line through a telephone device.

8. A radio paging receiver as claimed in claim 7, wherein said dual tone generating means (5, 8) comprises:
a generating section (8) for generating a dual tone multi-frequency signal on the basis of said character code sequence; and
a speaker section (5) for outputting said dual tone in accordance with said dual tone multi-frequency signal.

## Patentansprüche

1. Funkrufempfänger zum Unterscheiden eines spezifischen aus mehreren Rufsignalen, das für den Funkrufempfänger kennzeichnend ist, um ein dem spezifischen Rufsignal folgendes spezifisches Nachrichtensignal als Empfangsnachrichtensignal zu empfangen, das als Empfangsnachricht auf einem Anzeigebereich (6) angezeigt wird, wobei der Funkrufempfänger eine Erzeugungseinrichtung (3, 10, 11) zum Erzeugen einer Sendenachricht aufweist, die als Sendenachrichtensignal an einen Gegenfunkrufempfänger über eine Telefonleitung gesendet wird, **dadurch gekennzeichnet, daß** die Erzeugungseinrichtung aufweist:
eine Nachrichtenspeichereinrichtung (10) zum Speichern mehrerer voreingestellter Nachrichten und mehrerer selbsterzeugter Nachrichten;
eine Zeichentabelleneinrichtung (11) zum Speichern mehrerer Zeichen in jeweiliger Entsprechung zu mehreren Zeichencodes; und
eine Nachrichtenerzeugungseinrichtung (3) zum Zugreifen auf die Nachrichtenspeichereinrichtung, um die voreingestellten Nachrichten als ausgelesene Nachrichten auszulesen und so die ausgelesenen Nachrichten auf dem Anzeigebereich anzuzeigen, wobei die Nachrichtenerzeugungseinrichtung ausgewählte der ausgelesenen Nachrichten in Übereinstimmung mit einem Auswahlsignal auswählt, um die ausgewählten ausgelesenen Nachrichten zu einer kombinierten Nachricht zu kombinieren und so die kombinierte Nachricht auf dem Anzeigebereich anzuzeigen;
wobei die Nachrichtenerzeugungseinrichtung eine Umwandlungseinrichtung zum Umwandeln der kombinierten Nachricht in eine Zeichencodefolge anhand der Zeichentabelleneinrichtung aufweist, um die Zeichencodefolge als Sendenachricht auf dem Anzeigebereich anzuzeigen.

2. Funkrufempfänger nach Anspruch 1, wobei die Zeichentabelleneinrichtung (11) Kana- und alphanumerische Zeichen als Zeichen gespeichert.

3. Funkrufempfänger nach Anspruch 1 oder 2, wobei die Zeichentabelleneinrichtung (11) eine Matrizentabelle mit den Zeichencodes ist, von denen jeder einen Zeilencode und einen Spaltencode aufweist, wobei jedes der Zeichen durch den Zeilen- und den Spaltencode dargestellt ist.

4. Funkrufempfänger nach Anspruch 1, 2 oder 3 mit einer Zweitonerzeugungseinrichtung (5, 8) zum Erzeugen eines Zweitons auf der Grundlage der Zeichencodefolge, um den Zweiton über ein Telefongerät zur Telefonleitung zu führen.

5. Funkrufempfänger nach Anspruch 4, wobei die Zweitonerzeugungseinrichtung (5, 8) aufweist:
einen Erzeugungsbereich (8) zum Erzeugen eines Zweitonmehrfrequenzsignals auf der Grundlage der Zeichencodefolge; und
einen Lautsprecherbereich (5) zum Ausgeben des Zweitons in Übereinstimmung mit dem Zweitonmehrfrequenzsignal.

6. Funkrufempfänger nach einem der Ansprüche 1 bis 5, wobei die Nachrichtenerzeugungseinrichtung (3) die kombinierte Nachricht als eine der selbsterzeugten Nachrichten in der Nachrichtenspeichereinrichtung (10) speichert.

7. Funkrufempfänger nach Anspruch 1 oder 6 mit einer Zweitonerzeugungseinrichtung (5, 8) zum Erzeugen eines Zweitons auf der Grundlage der Zeichencodefolge, um den Zweiton über ein Telefongerät zur Telefonleitung zu führen.

8. Funkrufempfänger nach Anspruch 7, wobei die Zweitonerzeugungseinrichtung (5, 8) aufweist:
einen Erzeugungsbereich (8) zum Erzeugen eines Zweitonmehrfrequenzsignals auf der Grundlage der Zeichencodefolge; und
einen Lautsprecherbereich (5) zum Ausgeben des Zweitons in Übereinstimmung mit dem Zweitonmehrfrequenzsignal.

## Revendications

1. Récepteur d'appels radio destiné à distinguer un signal d'appel spécifique d'une pluralité de signaux d'appel spécifiques audit récepteur d'appels radio pour recevoir un signal de message spécifique succédant audit signal d'appel spécifique en tant que signal de message de réception qui est affiché en tant que message de réception sur un étage d'affichage (6), ledit récepteur d'appels radio comprenant des moyens de production (3, 10, 11) destinés à produire un message de transmission qui est transmis en tant que signal de message de transmission à un récepteur d'appels radio pendant à travers une ligne téléphonique, **caractérisé en ce que** lesdits moyens de production comprennent :
des moyens de mémoire de messages (10) destinés à mémoriser une pluralité de messages prédéterminés et une pluralité de ses propres messages élaborés ;
des moyens à table de caractères (11) destinés à mémoriser une pluralité de caractères en correspondance avec une pluralité de codes de caractères, respectivement ; et
des moyens de production de messages (3) destinés à accéder auxdits moyens de mémoire de messages pour lire lesdits messages prédéterminés en tant que messages lus et pour afficher, ainsi, lesdits messages lus sur ledit étage d'affichage, lesdits moyens de production de messages sélectionnant les messages sélectionnés desdits messages lus en fonction d'un signal de sélection pour combiner lesdits messages lus sélectionnés en un message combiné et afficher, ainsi, ledit message combiné sur ledit étage d'affichage ;
lesdits moyens de production de messages comprenant des moyens de conversion destinés à convertir ledit message combiné en une séquence de codes de caractères en se référant auxdits moyens à table de caractères pour afficher ladite séquence de codes de caractères en tant que ledit message de transmission sur ledit étage d'affichage.

2. Récepteur d'appels radio selon la revendication 1, dans lequel lesdits moyens à table de caractères (11) mémorisent des caractères kana et alphanumériques en tant que lesdits caractères.

3. Récepteur d'appels radio selon la revendication 1 ou 2, dans lequel lesdits moyens à table de caractères (11) sont une table de matrice dont lesdits codes de caractères comprennent chacun un code de ligne et un code de colonne, chacun desdits caractères étant représenté par ledit code de ligne et ledit code de colonne.

4. Récepteur d'appels radio selon la revendication 1, 2 ou 3, comprenant des moyens de génération de double ton (5, 8) destinés à générer un double ton sur la base de ladite séquence de codes de caractères afin de transmettre ledit double ton à ladite ligne téléphonique à travers un appareil téléphonique.

5. Récepteur d'appels radio selon la revendication 4, dans lequel lesdits moyens de génération de double ton (5, 8) comprennent :
un étage de génération (8) destiné à générer un signal multifréquence à double ton sur la base de ladite séquence de codes de caractères ; et
un étage de haut-parleur (5) destiné à délivrer ledit double ton en fonction dudit signal multifréquence de double ton.

6. Récepteur d'appels radio selon l'une quelconque des revendications 1 à 5, dans lequel lesdits moyens de production de messages (3) mémorisent ledit message combiné en tant que l'un de ses propres messages élaborés dans lesdits moyens de mémoire de messages (10).

7. Récepteur d'appels radio selon la revendication 1 ou 6, comprenant des moyens de génération de double ton (5, 8) destinés à générer un double ton sur la base de ladite séquence de codes de caractères afin de transmettre ledit double ton à ladite ligne téléphonique à travers un appareil téléphonique.

8. Récepteur d'appels radio selon la revendication 7, dans lequel lesdits moyens de génération de double ton (5, 8) comprennent :
un étage de génération (8) destiné à générer un signal multifréquence à double ton sur la base de ladite séquence de codes de caractères ; et
un étage de haut-parleur (5) destiné à délivrer ledit double ton en fonction dudit signal multifréquence de double ton.
